# DEMANDE DE BREVET EUROPEEN

(11) **EP 0 895 017 A1**
(43) Date de publication de la demande: **03.02.1999**
(21) Numéro de dépôt: 98401845.7
(22) Date de dépôt: 21.07.1998
(51) Int. Cl.: F17C 1/08, F17C 1/00, B60K 15/03

(54) **Réservoir pour fluide sous pression**

(30) Priorité: 30.07.1997 FR 9709732
(71) Demandeur: RENAULT, 92109 Boulogne-Billancourt (FR)
(72) Inventeur: Griesemann, Jean-Claude, 92310 Sevres (FR); Heurtaux, Fabien, 78500 Sartrouville (FR)

(57) **Abrégé**

Réservoir pour fluide sous pression, du type monté sur un véhicule automobile pour contenir au moins un fluide sous pression, de forme aplatie. Le réservoir comprend deux éléments latéraux cylindriques 4 et 5 pourvus d'une ouverture rectangulaire sur toute leur longueur, les bords supérieur et inférieur de ladite ouverture étant parallèles à l'axe des cylindres, et au moins une entretoise 8, 9, disposée dans une ouverture rectangulaire et joignant les bords supérieur et inférieur de ladite ouverture, pour former un espace intérieur clos en forme de cylindres tronqués juxtaposés 1, 2, 3.

## Description

La présente invention relève du domaine des réservoirs pour fluide sous pression, comportant une phase gazeuse ou une phase gazeuse et une phase liquide, et prévus pour être montés sur un véhicule automobile.

De tels réservoirs doivent être adaptés à l'espace disponible, généralement de faible hauteur, de type matelas. L'intégration de réservoirs sous pression pour stocker par exemple des carburants gazeux est ainsi limitée par la géométrie des réservoirs, cylindrique, torique, sphérique, elliptique, et par leur poids du fait de la multiplication de réservoirs élémentaires sur les automobiles ou les véhicules industriels.

On peut par exemple utiliser plusieurs réservoirs cylindriques et les raccorder mutuellement au niveau mécanique et pneumatique. Un tel type de réservoir entraîne une perte de place en raison de la faiblesse de son volume utile, une augmentation du poids, du coût global et des risques de fuite. Les réservoirs en acier présentent l'inconvénient d'un poids élevé. D'autres, réalisés en alliage d'aluminium par déformation superplastique et caissonnage, sont limités à une utilisation aéronautique.

La présente invention a pour objet de résoudre les inconvénients des réservoirs évoqués ci-dessus, et de proposer un réservoir de forme plate, de volume utile optimisé par rapport à son encombrement, de faible poids et de fabrication économique.

Le réservoir pour fluide sous pression, selon l'invention, est du type monté sur un véhicule automobile pour contenir un ou plusieurs gaz sous pression et est de forme aplatie. Le réservoir comprend deux éléments latéraux cylindriques coaxiaux pourvus d'une ouverture rectangulaire sur toute leur longueur, les bords supérieur et inférieur de ladite ouverture étant parallèles à l'axe des cylindres. Le réservoir comprend au moins une entretoise disposée dans une ouverture rectangulaire et joignant les bords supérieur et inférieur de ladite ouverture pour former un espace intérieur clos en forme de cylindres tronqués juxtaposés.

On obtient ainsi un volume intérieur de réservoir important par rapport à son encombrement extérieur, notamment lorsqu'il doit être disposé dans un espace parallélépipédique.

Dans un mode de réalisation de l'invention, le réservoir comprend au moins un élément supérieur rectangulaire bombé vers l'extérieur, et au moins un élément inférieur rectangulaire bombé vers l'extérieur, lesdits éléments rectangulaires supérieur et inférieur étant pourvus de bords parallèles à l'axe des cylindres, lesdits bords étant solidarisés, soit avec un bord correspondant d'un élément rectangulaire adjacent, soit avec un bord correspondant d'un élément latéral adjacent. Le volume du réservoir peut être sélectionné en disposant un nombre donné de paires d'éléments rectangulaires supérieur et inférieur.

Avantageusement, au moins une entretoise est prévue à chaque jonction entre deux éléments rectangulaires et à chaque jonction entre un élément rectangulaire et un élément latéral adjacent. Le réservoir étant sous pression, les entretoises permettent de reprendre les efforts internes qui tendent à écarter les éléments supérieurs des éléments inférieurs. Dans le cas d'un réservoir pourvu seulement d'éléments latéraux cylindriques, on peut prévoir une entretoise disposée entre ces deux éléments.

Les extrémités du réservoir sont obturées au moyen d'éléments d'obturation se présentant, soit sous une forme monobloc obturant une pluralité d'extrémités de cylindres tronqués, soit sous la forme d'éléments individuels obturant une extrémité d'un seul cylindre tronqué.

Dans un mode de réalisation de l'invention, les entretoises sont d'épaisseurs différentes de celles des éléments latéraux et des éléments rectangulaires. Les entretoises sont ainsi optimisées pour résister à l'effort de traction qui s'exerce sur elles et peuvent être réalisées dans un matériau moins épais que les éléments latéraux et les éléments rectangulaires. On allège ainsi l'ensemble du réservoir.

Avantageusement, les entretoises sont soudées ou liées (directement par procédé d'extrusion) aux bords dont elles assurent la jonction.

Les entretoises peuvent se présenter sous la forme de rectangles plats parallèles à l'axe des cylindres ou de colonnes creuses évasées.

Le réservoir peut être réalisé en tôle emboutie ou encore en aluminium extrudé. Dans ce dernier cas, une pluralité d'éléments rectangulaires adjacents sont formés de façon monobloc.

Dans un mode de réalisation de l'invention, l'espace intérieur du réservoir, en forme de cylindres tronqués, est pourvu de cylindres de diamètres inégaux. On peut ainsi disposer d'un passage le long du réservoir dans lequel pourront être installés des câbles, des conduites, etc.

Chaque cylindre ou alvéole peut être de diamètre et donc d'épaisseur de paroi différente. Dans le cas où les alvéoles ne sont pas en communication mutuelle, on peut stocker des fluides de nature différente dans chaque alvéole.

Grâce à l'invention, on dispose d'un réservoir pour gaz sous pression, parfaitement adapté au volume complexe disponible dans un véhicule moderne.

L'invention sera mieux comprise à l'étude détaillée de quelques modes de réalisation pris à titre d'exemples nullements limitatifs et illustrés par les dessins annexés, sur lesquels :
la figure 1 est une vue en perspective d'un réservoir selon un premier mode de réalisation de l'invention;
la figure 2 est une vue de face d'un réservoir selon un deuxième mode de réalisation de l'invention;
la figure 3 est une variante de la figure 1; et
la figure 4 est une vue de face selon un troisième mode de réalisation de l'invention.

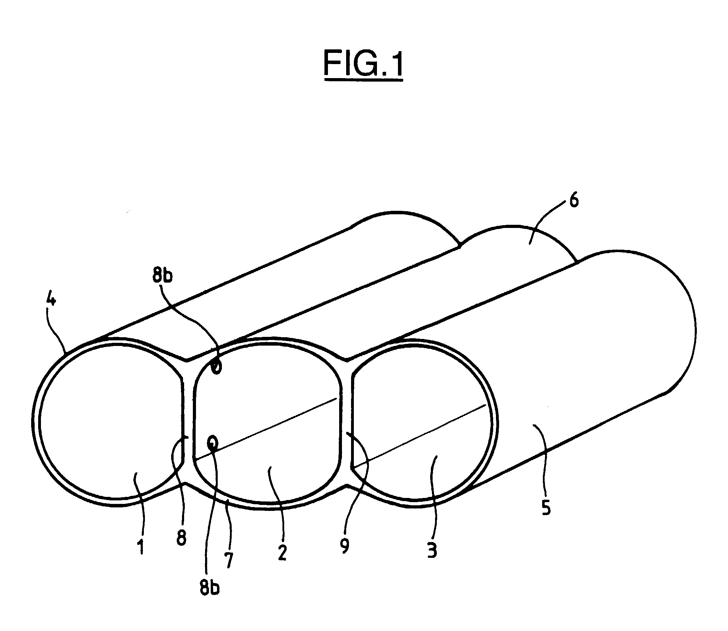

Comme on peut le voir sur la figure 1, le réservoir comprend un cylindre latéral 1, un cylindre central 2 et un cylindre latéral 3. Les cylindres 1 à 3 sont à section circulaire tronquée et sont appelés par extension cylindres tronqués. La paroi du réservoir est formée par un élément latéral cylindrique 4 correspondant au cylindre 1, un élément latéral cylindrique 5 correspondant au cylindre 3, un élément supérieur rectangulaire 6 bombé vers le haut, et un élément inférieur rectangulaire 7 bombé vers le bas. Les deux éléments rectangulaires bombés 6 et 7 correspondent au cylindre central 2. Deux entretoises 8 et 9 sont prévues, séparant respectivement le cylindre latéral 1 et le cylindre central 2, et le cylindre central 2 et le cylindre latéral 3.

Les éléments latéraux cylindriques 4 et 5 comprennent, du côté où ils sont tronqués, une ouverture rectangulaire fermée par les entretoises 8 et 9, les bords de cette ouverture étant parallèles aux axes des cylindres. Les éléments latéraux cylindriques 4 et 5 sont reliés respectivement aux entretoises 8 et 9, de façon étanche et solide, par exemple par soudage. Les éléments rectangulaires supérieur 6 et inférieur 7 sont également pourvus de bords parallèles à l'axe des cylindres et correspondant à la jonction entre les éléments latéraux cylindriques 4 et 5 et les entretoises 8 et 9.

Chaque alvéole ou cylindre tronqué peut être autonome (chacun contenant un gaz différent d'une pression propre, air comprimé, GPL...) ou bien encore être relié aux autres. Cette connexion peut se faire soit à travers les entretoises soit à travers les bouchons venant fermer les deux extrémités axiales.

Si l'on souhaite mettre en communication les cylindres, des perçages sont réalisés dans les entretoises.

Un perçage 8a est prévu dans l'entretoise 8 pour mettre en communication les cylindres 1 et 2. Ce perçage 8a est disposé dans le bas de l'entretoise 8 dans le cas d'un gaz comportant une phase liquide et peut être disposé en haut 8b si le gaz ne comporte qu'une phase gazeuse.

Lorsque le réservoir est rempli de gaz sous pression, les bords des éléments latéraux cylindriques 4 et 5 tendent à s'écarter l'un de l'autre, mais sont retenus en raison de leur solidarisation avec les entretoises 8 et 9. De même, les éléments rectangulaires supérieur 6 et inférieur 7 tendent à s'écarter l'un de l'autre mais sont retenus par les mêmes entretoises 8 et 9.

Si on met en communication les cylindres entre eux, la pression qui règne dans les cylindres 1 à 3 est identique . Les entretoises 8 et 9 ne sont donc plus soumises qu'au seul effort de traction résultant de la reprise des efforts s'exerçant sur les bords des éléments latéraux cylindriques 4 et 5 et des éléments rectangulaires supérieur 6 et inférieur 7. On peut donc prévoir des entretoises 8 et 9 d'épaisseur inférieure à celle des parois du réservoir, ce qui permet de réduire le poids du réservoir. La forme tronquée des cylindres 1 à 3 permet d'optimiser leurs sections utiles par rapport au rectangle dans lequel peut s'inscrire le réservoir, et permet donc de transporter une plus grande quantité de gaz pour un même encombrement de réservoir.

Les extrémités des cylindres 1 à 3 sont obturées au moyen de bouchons, non représentés. On peut prévoir un bouchon pour chaque cylindre ou, au contraire, un bouchon pour plusieurs cylindres ou pour l'ensemble des cylindres.

Le volume du réservoir est déterminé en faisant varier la longueur des cylindres 1 à 3, leur diamètre ou leur nombre. A titre de variante, on peut prévoir un réservoir muni de deux cylindres seulement et comprenant donc deux éléments latéraux cylindriques et une entretoise, en étant dépourvu d'éléments rectangulaires. Au contraire, dans le cas d'un réservoir de grande largeur, celui-ci pourrait comporter quatre, cinq ou six cylindres coaxiaux avec un nombre de paires d'éléments rectangulaires de respectivement deux, trois ou quatre.

L'un des cylindres du réservoir peut être de diamètre différent des autres en raison des cotes d'encombrement extérieur du réservoir.

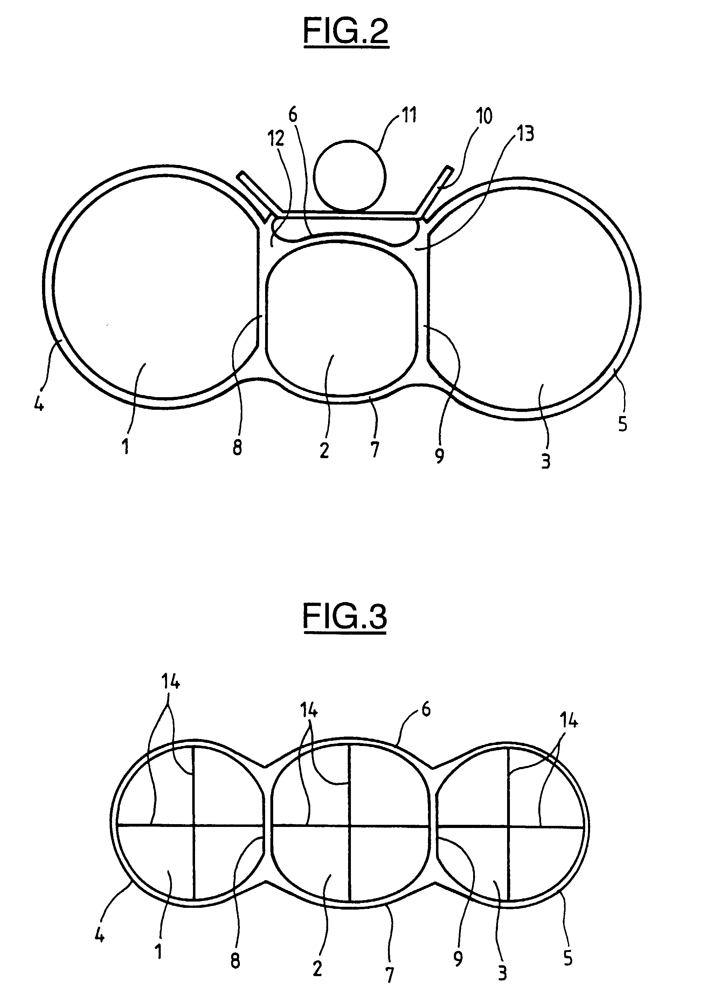

Comme on peut le voir sur la figure 2, le cylindre central 2 est de diamètre réduit par rapport aux cylindres latéraux 1 et 3. On dispose alors d'un espace libre le long du réservoir, dans lequel on peut disposer des éléments extérieurs tels que des passages de câble ou un écran thermique 10 surmonté d'une conduite 11 d'échappement de gaz chauds en provenance d'un moteur thermique. Les épaisseurs des parois des différents cylindres sont déterminées selon leur forme propre, les caractéristiques de leurs matériaux et la pression maximale du réservoir. Les zones de raccordement 12 et 13 entre les cylindres 1 à 3 sont renforcées en raison de la différence des efforts s'exerçant latéralement sur les entretoises 8 et 9 due à la réduction du diamètre du cylindre central 2.

A titre de variante, on peut installer dans l'espace libre, une boîte à vannes comprenant, par exemple, une électrovanne de sécurité, une soupape de surpression, une jauge de remplissage, une vanne de remplissage, un limiteur de débit et des raccords d'entrée et de sortie de gaz. La boîte à vannes est reliée à l'intérieur d'au moins l'un des cylindres et est délimitée par une plaque supérieure rapportée et fixée aux zones de raccordement 12 et 13 ou directement obtenue par profilage.

Comme on peut le voir sur la figure 3, l'intérieur de chaque cylindre 1 à 3 peut être renforcé si nécessaire par des renforts radiaux 14 cruciformes et parallèles aux axes des cylindres. De tels renforts radiaux 14 peuvent être facilement obtenus par extrusion, lorsque le réservoir est fabriqué en aluminium extrudé.

Les bouchons des cylindres peuvent être des pièces obturant tous les cylindres à la fois et soudées à ces derniers ou des bouchons individuels par cylindre. Ces bouchons peuvent être des pièces de fonderie ou des pièces réalisées par emboutissage.

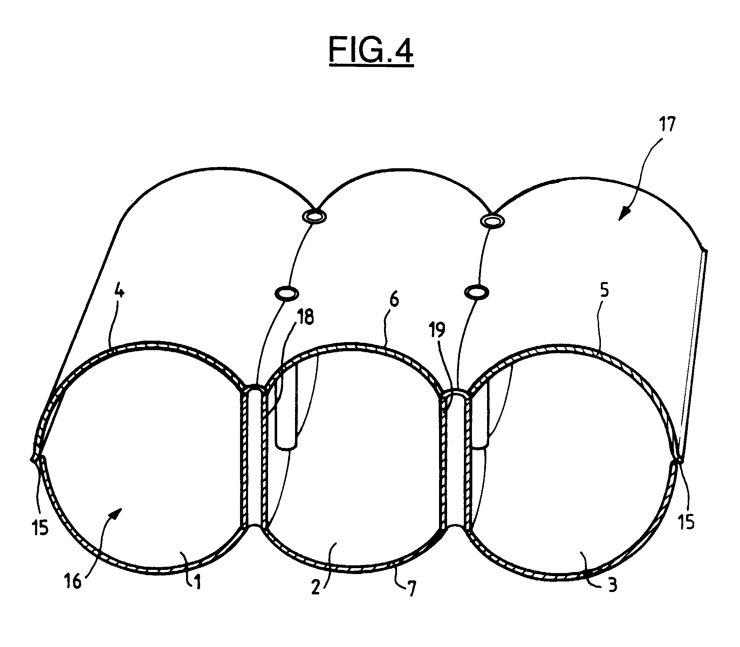

La figure 4 montre un réservoir réalisé en tôle d'acier ou d'aluminium emboutie. Après l'emboutissage, les tôles subissent un traitement thermique ou un timbrage cryogénique pour augmenter leur résistance intrinsèque. Chaque élément latéral, pseudo-cylindrique 4, 5 est réalisé en deux demi-coquilles 16 et 17. Les deux demi-coquilles 16 et 17 sont soudées avec une soudure continue 15 pour garantir leur étanchéité radiale. Une demi-coquille comprend une partie supérieure ou inférieure des deux éléments latéraux pseudo-cylindriques 4 et 5 et l'ensemble des éléments centraux supérieurs 6 ou inférieurs 7.

Les entretoises cylindriques 18 et 19 si elles sont creuses sont emmanchées en force dans des ouvertures correspondantes pratiquées dans les demi-coquilles 16 et 17 et évasées contre les parois des demi-coquilles 16 et 17, puis soudées de manière étanche sur la demi-coquille inférieure 16 et sur la demi-coquille supérieure 17. Les entretoises cylindriques 18 et 19 si elles sont pleines sont soudées par transparence (laser) à chaque demi-coquilles 16 et 17 qui ne sont pas percées au niveau des entretoises 18 et 19. Le réservoir définitif comporte les perçages nécessaires et éventuellement une boîte à vannes.

Les entretoises 18 et 19 subissent un effort de traction lié à la reprise des efforts de pression s'exerçant sur l'ensemble des demi-coquilles 16 et 17. Les entretoises 18 et 19 sont donc réalisées en tôle d'épaisseur supérieure à celle des demi-coquilles 16 et 17, ce qui permet de réduire le poids du réservoir et le coût matière, l'épaisseur des demi-coquilles 16 et 17 étant inférieure à celle d'un réservoir classique. Enfin, le centre de ces entretoises cylindriques 18 et 19, permet la fixation du réservoir sous le véhicule par tous moyens sans nécessiter l'ajout de pattes de fixation spécifiques.

Grâce à l'invention, on optimise le stockage du carburant sous pression dans un volume parallélépipédique de faible hauteur en occupant efficacement les volumes disponibles dans un véhicule.

## Revendications

1. Réservoir pour fluide sous pression, du type monté sur un véhicule automobile pour contenir au moins un fluide sous pression, de forme aplatie comprenant deux éléments latéraux cylindriques coaxiaux (4, 5) pourvus d'une ouverture rectangulaire sur toute leur longueur, les bords supérieur et inférieur de ladite ouverture étant parallèles à l'axe des cylindres, et au moins une entretoise (8, 9) disposée dans une ouverture rectangulaire et joignant les bords supérieur et inférieur de ladite ouverture, pour former un espace intérieur clos en forme de cylindres tronqués juxtaposés (1, 2, 3), caractérisé par le fait qu'il comprend au moins un élément supérieur rectangulaire (6) bombé vers l'extérieur et au moins un élément inférieur rectangulaire (7) bombé vers l'extérieur, lesdits éléments rectangulaires supérieur et inférieur étant pourvus de bords parallèles à l'axe des cylindres, lesdits bords étant solidarisés soit avec un bord correspondant d'un élément rectangulaire adjacent, soit avec un bord correspondant d'un élément latéral adjacent, au moins une entretoise étant prévue à chaque jonction entre deux éléments rectangulaires et à chaque jonction entre un élément rectangulaire et un élément latéral adjacent.

2. Réservoir selon la revendication 1, caractérisé par le fait que les entretoises ont la forme de rectangles plats parallèles à l'axe des cylindres.

3. Réservoir selon la revendication 2, caractérisé par le fait qu'une pluralité d'éléments rectangulaires adjacents sont formés de façon monobloc.

4. Réservoir selon l'une quelconque des revendications précédentes, caractérisé par le fait que l'espace intérieur en forme de cylindres tronqués est pourvu de cylindres de diamètres inégaux.

5. Réservoir selon l'une quelconque des revendications précédentes, caractérisé par le fait qu'il est extrudé.

6. Réservoir pour fluide sous pression, du type monté sur un véhicule automobile pour contenir au moins un fluide sous pression, de forme aplatie, comprenant deux éléments latéraux cylindriques coaxiaux (4, 5) pourvus d'une ouverture rectangulaire sur toute leur longueur, les bords supérieur et inférieur de ladite ouverture étant parallèles à l'axe des cylindres, et au moins une entretoise (8, 9) disposée dans une ouverture rectangulaire et joignant les bords supérieur et inférieur de ladite ouverture, pour former un espace intérieur clos en forme de cylindres tronqués juxtaposés (1, 2, 3), caractérisé par le fait qu'il est réalisé en deux demi-coquilles, chaque demi-coquille comprenant une partie supérieure ou inférieure des deux éléments latéraux et les éléments centraux supérieurs ou inférieurs.

7. Réservoir selon la revendication 6, caractérisé par le fait que la demi-coquille supérieure comprend au moins un élément supérieur rectangulaire (6) bombé vers l'extérieur et que la demi-coquille inférieure comprend au moins un élément inférieur rectangulaire (7) bombé vers l'extérieur.

8. Réservoir selon la revendication 7, caractérisé par le fait qu'au moins une entretoise est prévue à chaque jonction entre deux éléments rectangulaires et à chaque jonction entre un élément rectangulaire et un élément latéral adjacent.

9. Réservoir selon l'une quelconque des revendications 6 à 8, caractérisé par le fait que les entretoises sont soudées aux bords dont elles assurent la jonction.

10. Réservoir selon l'une quelconque des revendications 6 à 9, caractérisé par le fait que les deux demi-coquilles sont mutuellement continument soudées.

11. Réservoir selon l'une quelconque des revendications 6 à 10, caractérisé par le fait que les entretoises ont la forme de colonnes creuses évasées.

12. Réservoir selon l'une quelconque des revendications 6 à 11, caractérisé par le fait que chaque demi-coquille est réalisée en tôle emboutie.

13. Réservoir selon l'une quelconque des revendications précédentes, caractérisé par le fait que les extrémités du réservoir sont obturées.

14. Réservoir selon l'une quelconque des revendications précédentes, caractérisé par le fait que les entretoises sont d'épaisseur différente de celle des éléments latéraux et des éléments rectangulaires.
